# FASCICULE DE BREVET EUROPEEN

(11) **EP 3 215 714 B1**
(45) Date de publication et mention de la délivrance du brevet: **24.04.2019**
(21) Numéro de dépôt: 15797142.5
(22) Date de dépôt: 03.11.2015
(51) Int. Cl.: F01D 5/20, F01D 11/08

(54) **AUBE DE TURBINE AVEC CAPUCHON D'EXTRÉMITÉ**
TURBINENLAUFSCHAUFEL MIT BLATTSPITZENABDECKUNG
TURBINE BLADE WITH TIP CAP

(30) Priorité: 04.11.2014 FR 1460618
(43) Date de publication de la demande: 13.09.2017
(73) Titulaire: SAFRAN AIRCRAFT ENGINES, 75015 Paris (FR)
(72) Inventeur: OLIVE, Rémi, Philippe, Oswald, 77550 Moissy-Cramayel Cedex (FR); DE MAESSCHALCK, Cis, Guy, Monique, 8500 Kortrijk (BE); LAVAGNOLI, Sergio, 1050 Bruxelles (BE); PANIAGUA, Guillermo, 1930 Nossegem (BE)
(74) Mandataire: Regimbeau
(86) Numéro de dépôt international: PCT/FR2015/052954
(87) Numéro de publication internationale: WO 2016/071620

(56) Documents cités:
- FR-A1- 2 928 405
- JP-A- H06 264 703
- JP-A- S62 223 402
- US-A- 5 503 527
- US-A- 5 733 102
- US-A1- 2010 303 625
- US-A1- 2014 044 557

## Description

La présente invention concerne les aubes de turbine de turbomachine.

Elle trouve notamment avantageusement application dans le cas de turbines haute pression en sortie de la chambre de combustion d'un turboréacteur.

### DOMAINE TECHNIQUE GÉNÉRAL ET ETAT DE LA TECHNIQUE

On prévoit classiquement entre les aubes d'une turbine de turbomachine et la face interne de l'anneau dans lequel ledit rotor tourne, un jeu en sommet d'aube qui permet la rotation dudit rotor. Du fait du mouvement du rotor et de la différence de pression entre l'intrados et l'extrados des aubes, des écoulements de fuite se créent au niveau du jeu entre le sommet de chacune des aubes et la face interne de l'anneau. Ces écoulements, et les tourbillons qu'ils créent au niveau de l'extrados, sont la source de nombreux problèmes aérodynamiques et aérothermiques qui affectent directement les performances de la turbomachine.

Le jeu entre le sommet des aubes et la surface interne de l'anneau est généralement ajusté afin de réduire ces écoulements. Néanmoins, la réduction de ce jeu augmente le risque de contacts entre les aubes et la surface interne de l'anneau et limite fortement la durée de vie des aubes ; en outre, elle entraine également une augmentation de la température du sommet des aubes, ce qui a également un impact sur la durée de vie des aubes.

Pour pallier cet inconvénient, il est classiquement connu de prévoir des baignoires au sommet des aubages, ce qui permet de limiter la surface de contact entre l'aube et l'anneau. Ces baignoires sont généralement définies par un rebord qui délimite un contour fermé et qui s'étend à cet effet, au niveau du sommet de l'aube, le long de l'extrados et de l'intrados, du bord d'attaque au bord de fuite.

Des configurations de baignoires destinées à optimiser les performances aérodynamiques et aérothermiques des aubes ont notamment été proposées.

On connaît par exemple la demande de brevet WO2009/115728 de la demanderesse qui propose un exemple de configuration d'un sommet d'aube comprenant une baignoire à son sommet. La baignoire comprend une cavité dans laquelle est disposée une paroi formant un déflecteur, ladite paroi n'étant pas reliée au rebord définissant la baignoire et pouvant comporter des trous de refroidissement.

On connaît d'après le document US 5 503 527 A, une aube de turbomachine comportant à son sommet une baignoire définie par un rebord, le rebord comportant une ouverture amont au niveau du bord d'attaque et une ouverture aval au niveau du bord de fuite.

Les solutions connues dans l'art antérieur à ce jour s'avèrent toutefois insuffisantes au vu notamment des performances demandées aux turboréacteurs de nouvelle génération.

### PRÉSENTATION GÉNÉRALE DE L'INVENTION

Un but général de l'invention est d'augmenter les performances aérodynamiques et aérothermiques d'aubes de turbines.

Notamment, l'invention propose une structure de baignoire en sommet des aubes qui permet une augmentation du rendement de la turbine.

On notera ici que dans le cas de turboréacteurs, une augmentation de rendement des turbines est directement répercutée sur le rendement et la consommation spécifique du turboréacteur lui-même. C'est la raison pour laquelle la solution proposée trouve avantageusement application dans le cas d'aubes de turbine haute pression de turboréacteur.

En particulier, selon un aspect, l'invention consiste en une aube de turbine de turbomachine comprenant un extrados, un intrados, un bord d'attaque et un bord de fuite et ainsi qu'une baignoire à son sommet, ladite baignoire est définie par un rebord et comprend un fond et une nervure interne qui est espacée du rebord définissant ladite baignoire, ladite nervure interne délimitant à l'intérieur de la baignoire une cavité, à l'intérieur de laquelle le passage d'écoulements de fuites est limité, la cavité étant formée par une portion du fond de la baignoire qui est entourée par la nervure interne.

Selon un autre aspect, la nervure interne comprend un extrados, un intrados, un bord d'attaque et un bord de fuite, l'intrados de la nervure interne étant espacé d'une manière sensiblement constante de l'intrados de l'aube, et l'extrados de la nervure interne étant espacé d'une manière sensiblement constante de l'extrados de l'aube.

Selon un aspect supplémentaire, la nervure interne comprend un prolongement amont au niveau de son bord d'attaque, le prolongement amont comprenant une première extrémité qui est reliée au bord d'attaque de la nervure interne, et une seconde extrémité qui est située en face du bord d'attaque de l'aube.

Selon un aspect additionnel, la nervure interne comprend un prolongement aval au niveau de son bord de fuite, le prolongement aval comprenant une première extrémité qui est reliée au bord de fuite de la nervure interne, et une seconde extrémité qui est située en face du bord de fuite de l'aube.

Selon un aspect supplémentaire, une ouverture amont est réalisée dans le rebord au niveau du bord d'attaque.

Selon un aspect supplémentaire, l'ouverture amont est réalisée dans le rebord sur l'intrados et sur une portion d'extrémité de bord d'attaque de l'extrados.

Selon un autre aspect, une ouverture aval est réalisée dans le rebord au niveau du bord de fuite.

Selon un autre aspect, l'ouverture aval est réalisée dans le rebord uniquement sur l'intrados.

### DESCRIPTIF DES FIGURES

D'autres caractéristiques, buts et avantages de la présente invention apparaitront à la lecture de la description détaillée qui va suivre, et en regard des dessins annexés, donnés à titre d'exemples non limitatifs et sur lesquels :
- la figure 1 représente une vue en perspective d'un sommet d'une aube d'une roue mobile sur lequel a été réalisée une baignoire selon un premier mode de réalisation de l'invention ;
- la figure 2 représente une vue en perspective d'un sommet d'une aube d'une roue mobile sur lequel a été réalisée une baignoire selon un deuxième mode de réalisation de l'invention ;
- la figure 3 représente une vue en perspective d'un sommet d'une aube d'une roue mobile sur lequel a été réalisée une baignoire selon un troisième mode de réalisation de l'invention ;
- la figure 4 représente une vue en perspective d'un sommet d'une aube d'une roue mobile sur lequel a été réalisée une baignoire selon un quatrième mode de réalisation de l'invention ;
- la figure 5 représente une vue du dessus de l'aube selon le troisième mode de réalisation de l'invention ;
- la figure 6 représente une vue du dessus de l'aube selon le quatrième mode de réalisation de l'invention ;
- la figure 7 représente une vue du dessus de l'aube selon un cinquième mode de réalisation de l'invention ;

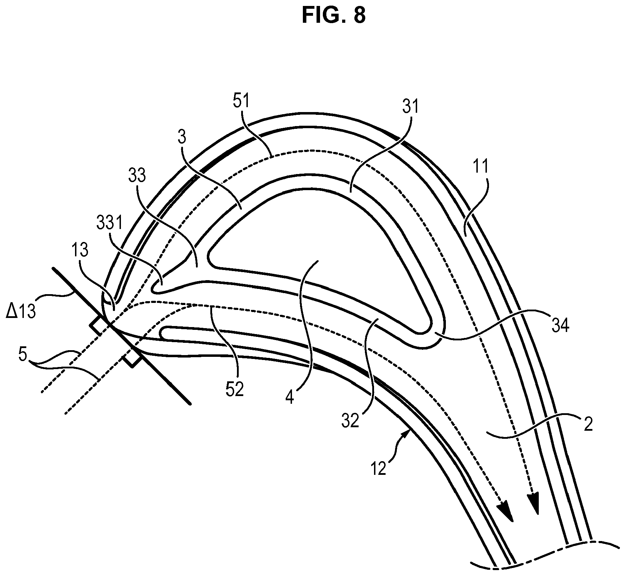

- La figure 8 représente une vue de dessus de l'aube selon le cinquième mode de réalisation de l'invention qui précise la direction des écoulements de fuites par rapport au bord d'attaque de l'aube ;
- la figure 9 représente une vue du dessus de l'aube selon le premier mode de réalisation qui précise la structure de l'extrados ;
- la figure 10 représente une vue d'une turbine sur laquelle est représentée l'axe de ladite turbine ;
- la figure 11 représente une vue du dessus d'une aube sur laquelle est représenté une ligne de squelette de ladite aube ;
- la figure 12 représente une vue en coupe d'une aube selon l'un un mode réalisation.

### DESCRIPTION D'UN OU PLUSIEURS MODES DE REALISATION DETAILLES

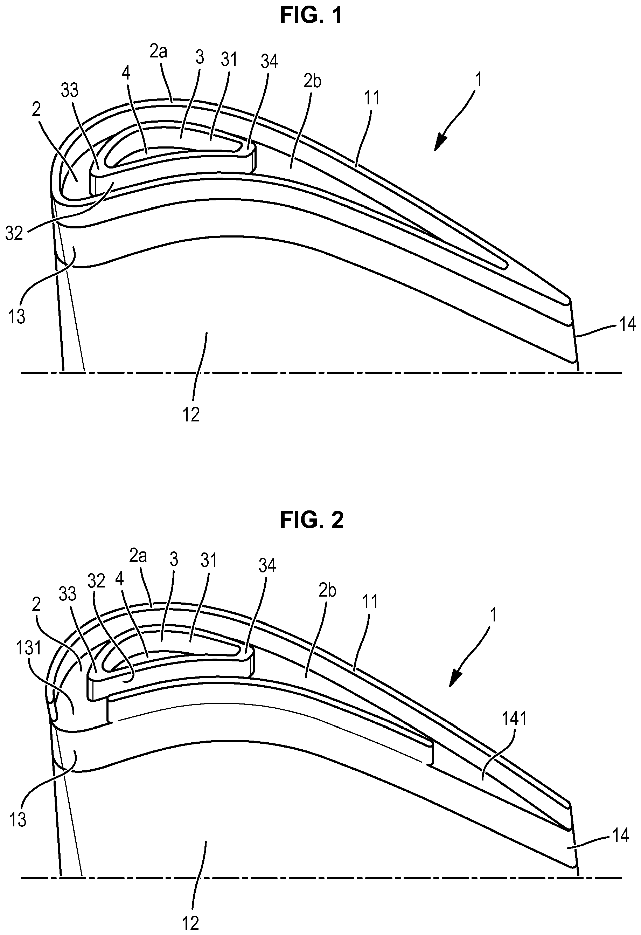

On a représenté sur les figures 1 et suivantes, une aube 1 de turbine haute pression de turboréacteur. Dans le turboréacteur, la turbine comprend un disque sur lequel est montée circonférentiellement une pluralité d'aubes 1. Ce disque et les aubes sont placés à l'intérieur d'un anneau situé en aval d'une chambre de combustion. Les aubes de la turbine et l'anneau sont dimensionnés pour que le jeu entre l'anneau et les aubes soit limité.

Une telle aube 1 a un profil aérodynamique et présente un extrados convexe 11 et un intrados concave 12 qui s'étendent l'un et l'autre entre d'une part un bord amont arrondi qui forme un bord d'attaque 13 et d'autre part un bord de fuite 14.

A son sommet, destiné à être en regard de la face interne de l'anneau, l'aube 1 présente une baignoire 2 définie par un rebord 2a qui borde un fond 2b de ladite baignoire en s'étendant le long de l'extrados 11 et de l'intrados 12, du bord d'attaque 13 au bord de fuite 14. Selon une variante, le rebord 2a de la baignoire 2 comprend au moins une portion sur laquelle il ne s'étend pas le long de l'extrados 11, de l'intrados 12, du bord d'attaque 13, ou du bord de fuite 14, mais s'en écarte, par exemple en rentrant vers l'intérieur du sommet de l'aube 1. En effet, le rebord 2a est constitué par une nervure au sommet de l'aube 1 qui suit le contour de l'aube 1, et qui peut faire partie dudit contour de l'aube 1, ou en être éloignée.

L'extrados 11 comprend un coude 110 qui est situé à proximité du bord d'attaque 13 de l'aube 1. L'extrados 11 comprend deux portions qui sont séparées par le coude 110 :
- une portion d'extrémité de bord d'attaque 111 qui est située entre le bord d'attaque 13 et le coude 110 ;
- une portion centrale 112 qui est située après le coude 110, et qui est séparée du bord d'attaque 13 par la portion d'extrémité d'attaque 111.

Une nervure interne 3 est disposée à l'intérieur de ladite baignoire 2, ladite nervure interne 3 étant de même hauteur que le rebord 2a.

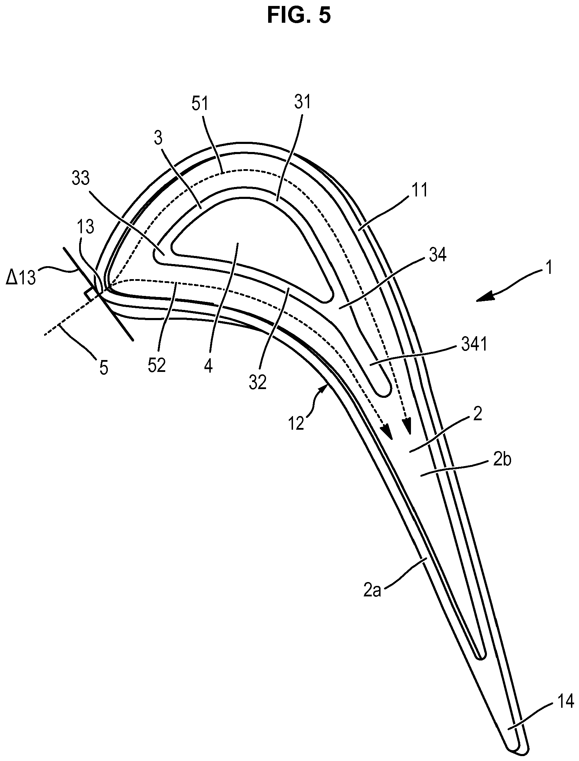

Cette nervure interne 3, comme montré dans les figures 5 et suivantes, est fermée sur elle-même et forme ainsi une cavité 4 à l'intérieur de la baignoire 2, de sorte à limiter le passage des écoulements de fuite 5 à l'intérieur de ladite cavité 4. Toutefois, selon une variante possible, la nervure interne 3 peut comprendre au moins un trou dans sa paroi. Le fait de limiter le passage de la majeure partie des écoulements de fuite 5 à l'intérieur de la cavité 4 permet d'améliorer les propriétés aérothermiques de l'aube 1 en limitant réchauffement de la cavité 4 par les écoulements de fuite 5. Le fait de limiter l'échauffement de la cavité 4 permet de créer une zone relativement froide au sommet de l'aube 1 qui sert à refroidir l'ensemble du sommet de l'aube, et ainsi augmenter la durée de vie de l'aube. Plus précisément, seule la partie la plus énergétique des écoulements de fuite 5 n'est pas arrêtée par la nervure interne 3 et passe dans la cavité 4.

La cavité 4 ne communique pas avec le circuit de refroidissement de l'aube, il s'agit en effet d'une portion du fond 2b de la baignoire 2 qui est entourée par la nervure interne 3. Ainsi, la baignoire 2 ne comprend qu'un seul fond 2b qui est plat, une portion de ce fond 2b étant entourée par la nervure interne 3, formant ainsi la cavité 4. Le fond de la cavité 4 est donc situé à la même hauteur sur l'aube 1 que le reste du fond 2b de la baignoire 2 qui n'est pas entouré par la nervure interne 3.

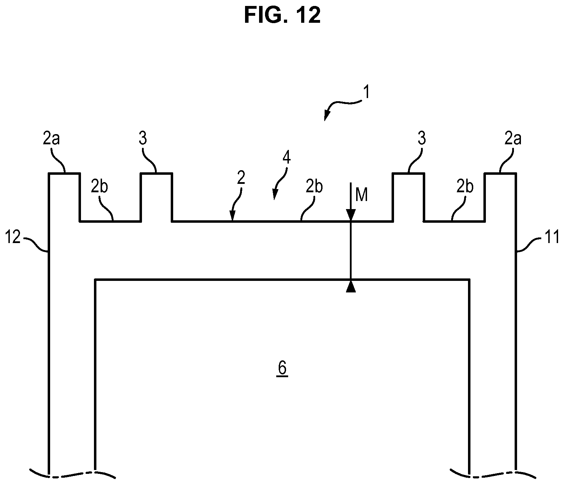

Comme représenté sur la figure 12, l'aube 1 comprend un circuit de refroidissement interne 6 qui est formé d'une cavité située à l'intérieure de l'aube sous la baignoire 2, un flux d'air qui est plus froid que les écoulements de fuite 5 circulant à l'intérieure de ladite cavité. Ce circuit de refroidissement interne permet de refroidir la baignoire 2. La baignoire 2 est séparée du circuit de refroidissement interne 6 par une épaisseur de matière M. Comme illustré sur la figure 12, l'épaisseur de matière M est constante sur tout le sommet de l'aube 1.

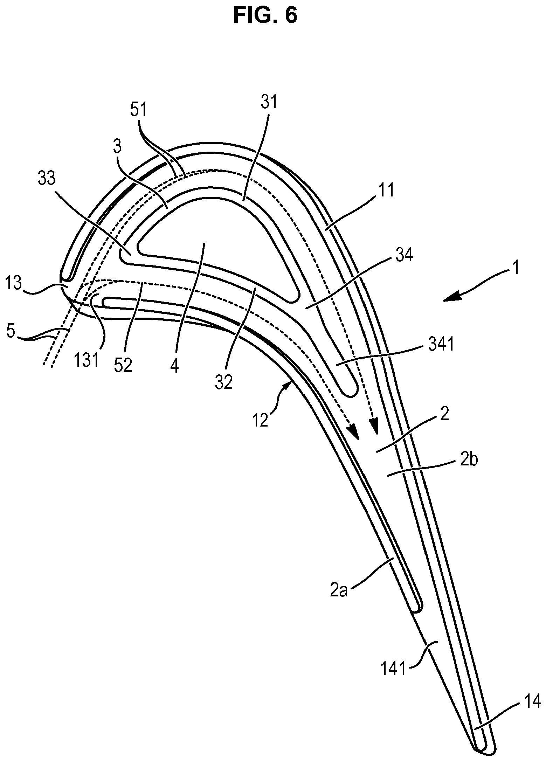

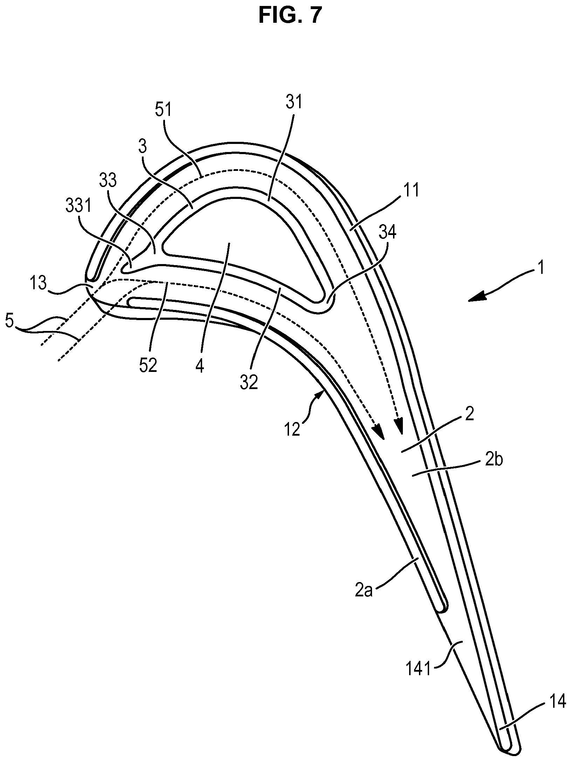

Afin de refroidir au mieux le sommet de l'aube, l'épaisseur de matière M doit être la plus faible possible. De plus, afin de réduire la force centrifuge créée par la rotation de l'aube 1, il est préférable de réduire la masse de ladite aube 1 à son sommet. Toutefois, une valeur minimum d'épaisseur de matière M est nécessaire afin que l'aube 1 puisse résister aux températures et aux pressions atteintes durant le fonctionnement de la turbomachine. Ainsi, le fait que la cavité 4 est formée d'une portion du fond 2b de la baignoire 2 qui est entourée par la nervure interne 3 permet de réduire la masse au sommet de l'aube 1 et de refroidir efficacement l'ensemble de la baignoire 2.De plus, comme représenté sur chacune des figures 1 à 7, la nervure interne 3 a une forme aérodynamique, ou dit autrement la nervure interne 3 a la forme d'une aube d'une turbine, et comprend ainsi :
- un extrados 31 convexe situé en face de l'extrados 11 de l'aube 1 ;
- un intrados 32 concave situé en face de l'intrados 12 de l'aube 1 ;
- un bord d'attaque 33 situé en face du bord d'attaque 13 de l'aube 1, qui forme la partie amont de la nervure interne 3 ;
- un bord de fuite 34 situé en face du bord de fuite 14 de l'aube 1, qui forme la partie aval de la nervure interne 3.

Ainsi, la partie la plus énergétique des écoulements de fuite 5 qui est passée dans la cavité 4 en passant par-dessus le bord d'attaque 33 et l'intrados 32 de la nervure interne 3, pousse contre l'extrados 31 de la nervure interne 3, et permet ainsi de récupérer un effort de charge plus important.

Dans la variante selon laquelle la nervure interne 3 comprend au moins un trou dans sa paroi, ce trou ne doit pas être situé au niveau du bord d'attaque 33 de la nervure interne 3, sinon les écoulements de fuite 5 peuvent pénétrer dans la cavité 4 sans obstacle. Ainsi, de manière préférentielle mais non limitative, la nervure interne 3 comprend un trou au niveau de son bord de fuite 34.

L'extrados 31 de la nervure interne 3 est espacé d'une manière constante de l'extrados 11 de l'aube 1, et l'intrados 32 de la nervure interne 3 est également espacé d'une manière constante de l'intrados de l'aube 1. Ainsi, la nervure interne 3 a une forme similaire au rebord 2a définissant la baignoire 2, et la cavité 4 a une forme similaire à la baignoire 2.

Une telle nervure interne 3 permet de récupérer une partie de l'effort de charge des écoulements de fuite 5, qui viennent s'appuyer sur ladite nervure interne 3. Plus précisément, les écoulements de fuite 5 viennent se diviser en deux flux 51 et 52 distincts au niveau du bord d'attaque 33 de la nervure interne 3 (figures 5 à 7), le premier flux 51 passant entre l'extrados 11 de l'aube 1 et l'extrados 31 de la nervure interne 3, et le second flux 52 passant entre l'intrados 12 de l'aube 1 et l'intrados 32 de la nervure interne 3. Durant leur passage, le premier flux 51 vient appuyer sur le rebord 2a le long de l'extrados 11 de l'aube 1, et le second flux 52 vient appuyer sur l'intrados 31 de la nervure interne 3, permettant ainsi de récupérer de l'effort de charge. Cette récupération de l'effort de charge des écoulements de fuite 5 permet d'augmenter les performances aérodynamiques de l'aube 1.

Comme représenté à la figure 5, les écoulements de fuite 5 ont une direction qui est sensiblement perpendiculaire à une tangente Δ13 au bord d'attaque 13.

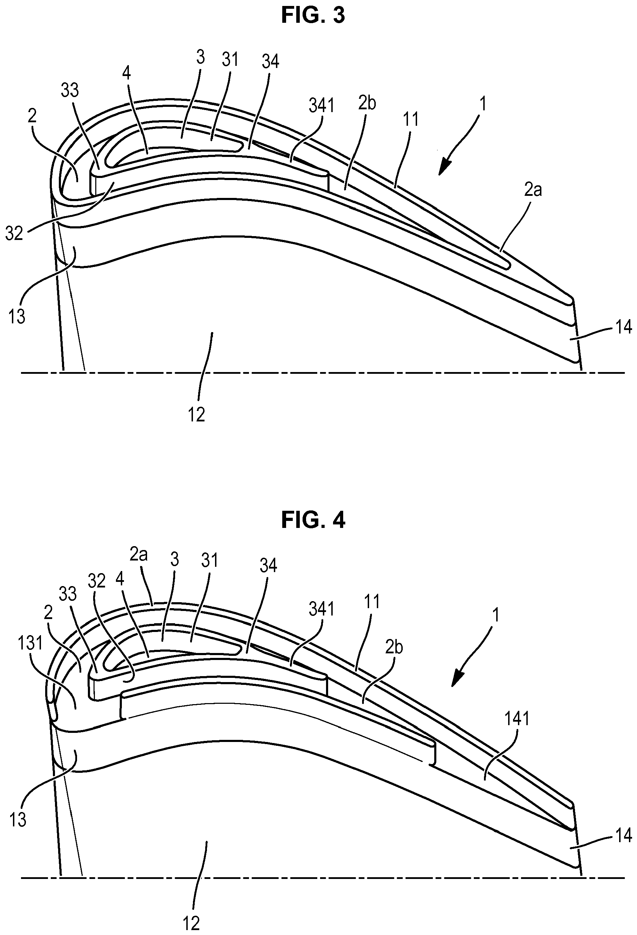

Selon une variante de mode de réalisation, et comme visible dans les figures 3 à 7, la nervure interne 3 peut comprendre un prolongement amont 331 situé au niveau du bord d'attaque 33 de la nervure interne 3, ou bien un prolongement aval 341 situé au niveau du bord de fuite 34 de la nervure interne 3. Le prolongement amont 331 comprend une première extrémité qui est reliée au bord d'attaque 33 de la nervure interne 3, et une seconde extrémité qui est situé en face du bord d'attaque 13 de l'aube 1. D'une façon similaire, le prolongement aval 341 comprend une première extrémité qui est reliée au bord de fuite 34 de la nervure interne 3, et une seconde extrémité qui est située en face du bord de fuite 14 de l'aube 1.

Les prolongements amont 331 et aval 341 sont des portions de la nervure interne 3 qui ne participent à la délimitation de la cavité 4. Selon une variante avantageuse, la largueur des prolongements amont 331 et aval 341 est sensiblement égale à la largeur de la nervure interne 3 au niveau de l'extrados 31, de l'intrados 32, du bord d'attaque 33, et du bord de fuite 34. Les prolongements amont 331 et aval 341 viennent respectivement prolonger la partie amont et la partie aval de la nervure interne 3, en les rapprochant du bord d'attaque 13 et du bord de fuite 14 de l'aube 1.

Lorsque la nervure interne 3 comprend un prolongement amont 331, les écoulements de fuite 5 se divisent en deux flux distincts 51 et 52 au niveau de l'extrémité du prolongement amont 331 qui est située en face du bord d'attaque 13 de l'aube 1.

Le prolongement amont 331 et le prolongement aval 341 permettent d'augmenter la surface de la nervure interne 3 sur laquelle le second flux 52 vient appuyer durant son passage dans la baignoire 2.

Selon un mode de réalisation additionnel, la nervure interne 3 peut comporter un prolongement amont 331 et un prolongement aval 341 simultanément. Les prolongements amont 331 ou aval 341 permettent donc d'améliorer les performances aérodynamiques de l'aube 1 en récupérant un effort de charge plus important.

Selon une autre variante de mode de réalisation, et comme visible dans les figures 2, 4, 6 et 7, le rebord 2a du sommet de l'aube 1 qui délimite la baignoire 2 comprend une ouverture amont 131 située au niveau du bord d'attaque 13, ainsi qu'une ouverture aval 141 située au niveau du bord de fuite 14. Le mode de réalisation ainsi présenté comprend une ouverture amont 131 et une ouverture aval 141, mais selon une variante supplémentaire, le rebord 2a peut ne comprendre qu'une ouverture amont 131 sans ouverture aval 141, ou qu'une ouverture aval 141 sans ouverture amont 131.

L'ouverture amont 131 permet d'une part de limiter la masse de l'aube 1 à son sommet, ce qui est important au vu de la vitesse de rotation de l'aube 1, et d'autre part d'augmenter d'une manière contrôlée la quantité des écoulements de fuite 5 entrant dans la baignoire afin d'augmenter la récupération des efforts de charge par l'aube 1. D'une manière préférentielle, l'ouverture amont 131 est réalisée principalement dans la partie du rebord 2a située sur l'intrados 11 de l'aube 1. Plus précisément, l'ouverture amont 131 est réalisée sur le rebord 2a située sur la portion d'extrémité de bord d'attaque 111 de l'extrados 11.

Une telle ouverture amont 131 permet de canaliser les écoulements de fuite 5 entrant par ladite ouverture amont 131 à la fois dans la cavité entre l'intrados 12 de l'aube 1 et l'intrados 32 de la nervure interne 3, et à la fois dans la cavité entre l'extrados 11 de l'aube 1 et l'extrados 31 de la nervure interne 3. Avec une telle ouverture amont 131, les écoulements de fuite 5 entrant par ladite ouverture amont 131 sont principalement canalisés dans la cavité entre l'intrados 12 de l'aube 1 et l'intrados 32 de la nervure interne 3. Ainsi, une telle ouverture amont 131 permet d'augmenter la récupération des efforts de charge en augmentant le débit du second flux 52, de sorte que les écoulements de fuite 5 viennent appuyer d'avantage sur l'intrados 32 de la nervure 3, et en augmentant également le débit du premier flux 51, de sorte que les écoulements de fuite 5 viennent appuyer d'avantage sur l'extrados 11 de l'aube 1.

Il est préférable que l'ouverture amont 131 soit réalisée dans le rebord 2a sur l'intrados 12 de l'aube 1 et sur la portion d'extrémité de bord d'attaque 111 car, au vu de l'angle d'incidence des écoulements de fuite 5 par rapport au bord d'attaque 13 de l'aube 1 :
- une ouverture amont 131 réalisée uniquement dans le rebord 2a sur la portion d'extrémité de bord d'attaque 111 de l'extrados 11 de l'aube 1, ne permettrait de canaliser les écoulements de fuite 5 que dans la cavité entre l'extrados 11 de l'aube 1 et l'extrados 31 de la nervure interne 3 ;
- une ouverture amont réalisée uniquement dans le rebord 2a sur l'intrados 12, ne permettrait de canaliser les écoulements de fuite 5 que dans la cavité entre l'intrados 12 de l'aube 1 et l'intrados 32 de la nervure interne 3 ;

L'ouverture aval 141 permet d'une part, d'une façon similaire à l'ouverture amont 131, de limiter la masse de l'aube 1 à son sommet, et d'autre part de faciliter l'évacuation des écoulements de fuite 5 par le bord de fuite 14. La bonne évacuation des écoulements de fuite 5 permet ainsi de limiter l'échauffement de la baignoire 2 dû à la stagnation des écoulements de fuite 5 dans la baignoire 2. D'une manière préférentielle, l'ouverture aval 141 n'est réalisée que dans le rebord 2a sur l'extrados 11 ou sur l'intrados 12 de l'aube 1. Selon une variante préférentielle possible, l'ouverture aval 141 est réalisée dans le rebord 2a sur l'intrados 12 de l'aube 1. Une telle ouverture permet d'évacuer les écoulements de fuite 5 d'une manière optimale et permet de garder un jeu acceptable entre le sommet de l'aube 1 et la face interne de l'anneau dans lequel l'aube 1 est mise en rotation.

Selon une variante supplémentaire, et comme visible dans les figures 4, 6 et 7, la nervure interne 3 comprend un prolongement amont 331 ou un prolongement aval 341, et le rebord 2a qui définit la baignoire 2 comprend une ouverture amont 131 ou une ouverture aval 141. Bien sûr, il est possible que la nervure interne 3 comprenne un prolongement amont 331 et un prolongement aval 341, et que le rebord 2a comprenne une ouverture amont 131 et une ouverture aval 141. La variante selon laquelle le rebord 2a comprend une ouverture amont 131 et une ouverture aval 141 est un compromis avantageux entre les performances aérodynamique et aérothermique de l'aube 1, car cela permet d'une part une limitation plus importante de la masse de l'aube 1, et d'autre part une meilleure circulation des écoulements de fuite 5 à l'intérieur de la baignoire 2 de sorte à récupérer d'avantage d'effort de charge tout en limitant l'échauffement du sommet de l'aube 1.

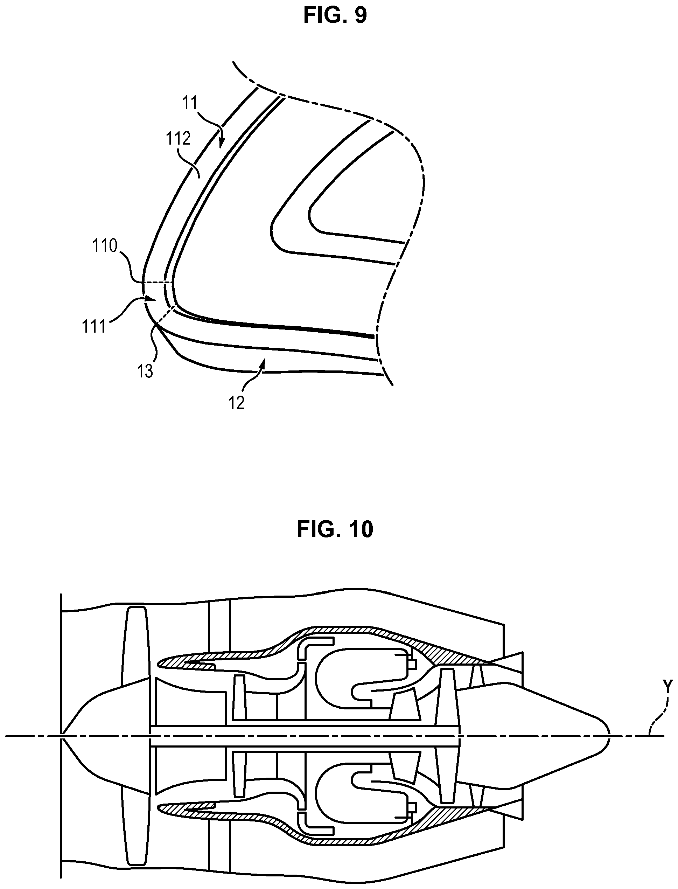

D'une manière avantageuse, la distance entre le bord d'attaque 13 de l'aube 1 et le bord d'attaque 33 de la nervure interne 3 est comprise entre 1% et 25% de la corde axiale de l'aube. La corde axiale est le projeté de la corde de l'aube 1 sur l'axe Y de la turbine, l'axe Y de la turbine étant illustré sur la figure 10. Dans le cas où la nervure interne 3 comprend un prolongement amont 331, la distance entre le bord d'attaque 13 de l'aube 1 et l'extrémité du prolongement amont 331est comprise entre 1% et 25% de la corde axiale de l'aube.

De plus, d'une manière préférentielle, la distance entre le bord de fuite 14 de l'aube 1 et le bord de fuite 34 de la nervure interne 3 est comprise entre 1% et 25% de la corde axiale de l'aube. Dans le cas où la nervure interne 3 comprend un prolongement aval 341, la distance entre le bord de fuite 14 de l'aube 1 et l'extrémité du prolongement aval 341est comprise entre 1% et 25% de la corde axiale de l'aube.

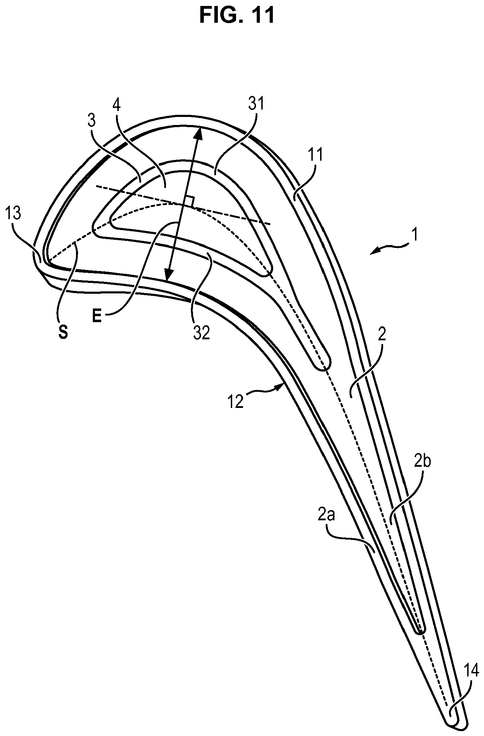

Selon une variante avantageuse, l'espacement entre l'extrados 11 de l'aube 1 et l'extrados 31 de la nervure interne 3 est compris entre 1% et 30% de l'épaisseur maximale E de l'aube, et préférentiellement entre 15% et 30%. Un tel espacement permet d'assurer qu'une partie maximale des écoulements de fuite 5 qui pénètrent dans la baignoire reste entre l'extrados 11 de l'aube 1 et l'extrados 31 de la nervure interne 3. L'épaisseur maximale E de l'aube est la distance maximale entre l'intrados 12 et l'extrados 11 de l'aube 1, ladite distance maximale E étant prise orthogonalement à la ligne S de squelette de l'aube tel qu'illustré sur la figure 11. La ligne S de squelette est constituée par l'ensemble des points équidistants de l'intrados 12 et de l'extrados 11 de l'aube 1.

Selon une variante préférentielle, l'espacement entre l'intrados 12 de l'aube 1 et l'intrados 32 de la nervure interne 3 est compris entre 1% et 30% de l'épaisseur maximale E de l'aube, et préférentiellement entre 15% et 30%. Un tel espacement permet d'assurer qu'une partie maximale des écoulements de fuite 5 qui pénètrent dans la baignoire reste entre l'intrados 12 de l'aube 1 et l'intrados 32 de la nervure interne 3.

Selon une variante avantageuse, la surface de la cavité 4 est comprise entre 15% et 40% de la surface totale de la baignoire 2, préférentiellement entre 20% et 30% de la surface totale de la baignoire 2, et encore plus préférentiellement 25% de la surface totale de ladite baignoire 2. Cette caractéristique permet d'assurer une bonne circulation des écoulements de fuite 5 à l'intérieur de la baignoire et de limiter l'échauffement d'une surface significative de la baignoire 2.

## Revendications

1. Aube (1) de turbine de turbomachine comprenant un extrados (11), un intrados (12), un bord d'attaque (13), un bord de fuite (14) et ainsi qu'une baignoire (2) à son sommet, ladite baignoire (2) est définie par un rebord (2a) et comprend un fond (2b) et une nervure interne (3) qui est espacée du rebord (2a) définissant ladite baignoire (2), **caractérisée en ce que** ladite nervure interne (3) délimite à l'intérieur de la baignoire une cavité (4), à l'intérieur de laquelle le passage d'écoulements de fuites (5) est limité, la cavité (4) étant formée par une portion du fond (2b) de la baignoire (2) qui est entourée par la nervure interne (3).

2. Aube selon la revendication 1, **caractérisée en ce que** la nervure interne (3) comprend un extrados (31), un intrados (32), un bord d'attaque (33) et un bord de fuite (34), l'intrados (32) de la nervure interne (3) étant espacé d'une manière sensiblement constante de l'intrados (12) de l'aube, et l'extrados (31) de la nervure interne (3) étant espacé d'une manière sensiblement constante de l'extrados (11) de l'aube (1).

3. Aube selon la revendication 2, **caractérisée en ce que** la nervure interne (3) comprend un prolongement amont (331) au niveau de son bord d'attaque (33), le prolongement amont (331) comprenant une première extrémité qui est reliée au bord d'attaque (33) de la nervure interne (3), et une seconde extrémité qui est située en face du bord d'attaque (13) de l'aube (1).

4. Aube selon la revendication 2 ou 3, **caractérisée en ce que** la nervure interne (3) comprend un prolongement aval (341) au niveau de son bord de fuite (34), le prolongement aval (341) comprenant une première extrémité qui est reliée au bord de fuite (34) de la nervure interne (3), et une seconde extrémité qui est située en face du bord de fuite (14) de l'aube (1).

5. Aube selon l'une des revendications précédente, **caractérisé en ce qu'**une ouverture amont (131) est réalisée dans le rebord (2a) au niveau du bord d'attaque (13).

6. Aube selon la revendication 5, **caractérisé en ce que** l'ouverture amont (131) est réalisée dans le rebord (2a) sur l'intrados (12), et sur une portion d'extrémité de bord d'attaque (111) de l'extrados (11).

7. Aube selon l'une des revendications précédente, **caractérisé en ce qu'**une ouverture aval (141) est réalisée dans le rebord (2a) au niveau du bord de fuite (14).

8. Aube selon la revendication 7, **caractérisée en ce que** l'ouverture aval (141) est réalisée dans le rebord (2a) uniquement sur l'intrados (12).

9. Disque de turbine, **caractérisée en ce qu'**il comporte des aubes (1) selon l'une des revendications précédentes.

10. Turbine haute pression de turboréacteur, **caractérisée en ce qu'**elle comporte des aubes (1) selon l'une des revendications 1 à 8.

## Patentansprüche

1. Turbinenschaufel (1) eines Turbinentriebwerks, umfassend eine Flügeloberseite (11), eine Flügelunterseite (12), eine Vorderkante (13), eine Hinterkante (14) und sowie einen Squealer (2) an ihrer Spitze, wobei der Squealer (2) durch einen Rand (2a) definiert ist und einen Boden (2b) und eine innere Rippe (3) umfasst, die von dem Rand (2a) beabstandet ist, welcher den Squealer (2) definiert, **dadurch gekennzeichnet, dass** die innere Rippe (3) im Inneren des Squealers einen Hohlraum (4) begrenzt, in dessen Inneren der Durchgang austretender Strömungen (5) begrenzt ist, wobei der Hohlraum (4) von einem Abschnitt des Bodens (2b) des Squealers (2) gebildet ist, der von der inneren Rippe (3) umgeben ist.

2. Schaufel nach Anspruch 1, **dadurch gekennzeichnet, dass** die innere Rippe (3) eine Flügeloberseite (31), eine Flügelunterseite (32), eine Vorderkante (33) und eine Hinterkante (34) umfasst, wobei die Flügelunterseite (32) der inneren Rippe (3) etwa konstant von der Flügelunterseite (12) der Schaufel beabstandet ist und die Flügeloberseite (31) der inneren Rippe (3) etwa konstant von der Flügeloberseite (11) der Schaufel (1) beabstandet ist.

3. Schaufel nach Anspruch 2, **dadurch gekennzeichnet, dass** die innere Rippe (3) eine stromaufwärtige Verlängerung (331) im Bereich ihrer Vorderkante (33) umfasst, wobei die stromaufwärtige Verlängerung (331) ein erstes Ende umfasst, das mit der Vorderkante (33) der inneren Rippe (3) verbunden ist, und ein zweites Ende, das sich gegenüber der Vorderkante (13) der Schaufel (1) befindet.

4. Schaufel nach Anspruch 2 oder 3, **dadurch gekennzeichnet, dass** die innere Rippe (3) eine stromabwärtige Verlängerung (341) im Bereich ihrer Hinterkante (34) umfasst, wobei die stromabwärtige Verlängerung (341) ein erstes Ende umfasst, das mit der Hinterkante (34) der inneren Rippe (3) verbunden ist, und ein zweites Ende, das sich gegenüber der Hinterkante (14) der Schaufel (1) befindet.

5. Schaufel nach einem der vorangehenden Ansprüche, **dadurch gekennzeichnet, dass** eine stromaufwärtige Öffnung (131) im Rand (2a) im Bereich der Vorderkante (13) ausgeführt ist.

6. Schaufel nach Anspruch 5, **dadurch gekennzeichnet, dass** die stromabwärtige Öffnung (131) im Rand (2a) auf der Flügelunterseite (12) und auf einem Vorderkanten-Endabschnitt (111) der Flügeloberseite (11) ausgeführt ist.

7. Schaufel nach einem der vorangehenden Ansprüche, **dadurch gekennzeichnet, dass** eine stromabwärtige Öffnung (141) im Rand (2a) im Bereich der Hinterkante (14) ausgeführt ist.

8. Schaufel nach Anspruch 7, **dadurch gekennzeichnet, dass** die stromabwärtige Öffnung (141) im Rand (2a) nur auf der Flügelunterseite (12) ausgeführt ist.

9. Turbinenscheibe, **dadurch gekennzeichnet, dass** sie Schaufeln (1) nach einem der vorangehenden Ansprüche aufweist.

10. Triebwerks-Hochdruckturbine, **dadurch gekennzeichnet, dass** sie Schaufeln (1) nach einem der Ansprüche 1 bis 8 aufweist.

## Claims

1. A turbine blade (1) of a turbine engine comprising an upper surface (11), a lower surface (12), a leading edge (13), a trailing edge (14), and a squealer tip (2) at its top, said squealer tip (2) being defined by a rim (2a) and comprises an inner rib (3) which is spaced from the rim (2a) defining said squealer tip (2), **characterized in that** said inner rib (3) is formed to delimit inside the squealer tip a cavity (4), inside which the transit of leakage flows (5) is limited, the cavity (4) being formed by a portion of the bottom (2b) of the squealer tip (2) which is surrounded by the inner rib (3).

2. The blade according to claim 1, **characterized in that** the inner rib (3) comprises an upper surface (31), a lower surface (32), a leading edge (33) and a trailing edge (34), the leading edge (32) of the inner rib (3) being spaced in a substantially constant manner from the lower surface (12) of the blade, and the upper surface (31) of the inner rib (3) being spaced in a substantially constant manner from the upper surface (11) of the blade (1).

3. The blade according to claim 2, **characterized in that** the inner rib (3) comprises an upstream extension (331) at its leading edge (33), the upstream extension (331) comprising a first end which is connected to the leading edge (33) of the inner rib (3), and a second end which is located facing the leading edge (13) of the blade (1).

4. The blade according to claim 2 or 3, **characterized in that** the inner rib (3) comprises a downstream extension (341) at its trailing edge (34), the downstream extension (341) comprising a first end which is connected to the trailing edge (34) of the inner rib (3), and a second end which is located facing the trailing edge (14) of the blade (1).

5. The blade according to one of the preceding claims, **characterized in that** an upstream opening (131) is made in the rim (2a) at the leading edge (13).

6. The blade according to claim 5, **characterized in that** the upstream opening (131) is made in the rim (2a) on the lower surface (12), and on an end portion of the leading edge (111) of the upper surface (11).

7. The blade according to one of the preceding claims, **characterized in that** a downstream opening (141) is made in the rim (2a) at the trailing edge (14)

8. The blade according to claim 7, **characterized in that** the downstream opening (141) is made in the rim (2a) only on the lower surface (12).

9. A turbine disk, **characterized in that** it comprises blades (1) according to one of the preceding claims.

10. A high-pressure turbine of a turbojet engine, **characterized in that** it comprises blades (1) according to one of claims 1 to 8.
